Europäisches Patentamt

European Patent Office

Office européen des brevets

(11) Veröffentlichungsnummer: **0 503 491 A1**

# (12) EUROPÄISCHE PATENTANMELDUNG

(21) Anmeldenummer: **92103831.1**

(22) Anmeldetag: **06.03.92**

(51) Int. Cl.5: **B24B 5/02**, B23Q 7/04

(30) Priorität: **08.03.91 DE 4107462**

(43) Veröffentlichungstag der Anmeldung:
**16.09.92 Patentblatt 92/38**

(84) Benannte Vertragsstaaten:
**CH DE FR IT LI**

(71) Anmelder: **H. Wohlenberg KG GmbH & Co.**
**Wohlenbergstrasse 6 - 8**
**W-3000 Hannover 1(DE)**

(72) Erfinder: **Tawakoli, Taghi, Dr.-Ing.**
**Franklinstrasse 35**
**W-2800 Bremen 33(DE)**

(74) Vertreter: **Eisenführ, Speiser & Partner**
**Martinistrasse 24**
**W-2800 Bremen 1(DE)**

(54) Werkzeugmaschine zur spanabhebenden Bearbeitung.

(57) Bei einer Werkzeugmaschine zur spanabhebenden Bearbeitung von Werkstücken (10) sind mehrere Werkstückträger (8) zum Aufspannen von Werkstükken (10) um mindestens ein rotierendes, spanabhebendes Werkzeug (4a; 4b) herum angeordnet. Während des Zerspanungsvorganges gelangt das Werkzeug (4a; 4b) mit den Werkstücken (10) derart in Berührung, daß auf das Werkzeug (4a; 4b) winklig zu dessen Rotationsachse gerichtete Kraftkomponenten ausgeübt werden. Die Werkstückträger (8) und/oder das Werkzeug (4a; 4b) sind während des Zerspanungsvorganges so verfahrbar, daß das rotierende Werkzeug (4a; 4b) zumindest kurz vor Beendigung des Zerspanungsvorganges stets mit allen auf diesen Werkstückträgern (8) aufgespannten Werkstükken (10) gleichzeitig in Berührung gelangt.

Fig. 1

EP 0 503 491 A1

Die Erfindung betrifft eine Werkzeugmaschine zur spanabhebenden Bearbeitung von Werkstükken, mit Werkstückträgern zum Aufspannen von Werkstücken und mit mindestens einem rotierenden, spanabhebenden Werkzeug, welches während des Zerspanungsvorgangs mit den Werkstücken in Berührung gelangt.

Derartige zerspanende Werkzeugmaschinen werden in vielfältiger Form eingesetzt. Im allgemeinen sind solche Werkzeugmaschinen in drei Hauptgruppen unterteilt, nämlich in Dreh-, Fräs- und Schleifmaschinen. Insbesondere durch Erhöhung des Vorschubes und der Schnittgeschwindigkeit konnte die Leistung derartiger Werkzeugmaschinen in den letzten Jahren erheblich gesteigert werden. An die Konstruktion derartiger Hochleistungswerkzeugmaschinen müssen jedoch wegen der hohen Schnittgeschwindigkeiten und der dadurch entstehenden hohen Schnittkräfte große Anforderungen gestellt werden. Der Antrieb, die von diesem angetriebene Spindel und das auf der Spindel sitzende Werkzeug müssen so ausgelegt werden, daß die beim Zerspanungsvorgang auftretenden hohen Schnittkräfte problemlos aufgenommen werden können, ohne daß dadurch die Verarbeitungsgenauigkeit und die Lebensdauer wesentlich beeinträchtigt wird.

Die Einhaltung der gewünschten Verarbeitungsgenauigkeit bildet insbesondere beim Hochleistungsschleifen ein Problem. Das Hochleistungsschleifen ist die Kombination von Hochgeschwindigkeits- und Tiefschleifen. Gemeinsames Merkmal des Tief- und Hochleistungsschleifens besteht in der großen Zustellung. Der wesentliche Unterschied des Hochleistungsschleifens zum Tiefschleifen liegt in der deutlich höheren Schnittgeschwindigkeit und in der wesentlich größeren Werkstückgeschwindigkeit. Dadurch können die beim Hochleistungsschleifen realisierbaren Abtragsraten mindestens um den Faktor 100 höher liegen als beim herkömmlichen Pendel- und Tiefschleifen. Neben den sehr viel höheren Abtragsleistungen zeichnet sich das Hochleistungsschleifen auch noch durch eine geringere thermische Schädigung des Werkzeugs, einen geringeren Werkzeugverschleiß, einen geringeren Energiebedarf und durch höhere Druckeigenspannungen an der Werkstückoberfläche aus. Die Vorteile des Hochleistungsschleifens können im wesentlichen nur dann optimal genutzt werden, wenn viel Material abzutragen ist und die Rüst- und Nebenzeiten relativ gering sind. Dabei kann das Hochleistungsschleifen in vielen Fällen andere spanabhebende Fertigungsverfahren ersetzen. Auf jeden Fall kommt das Schleifen als Endbearbeitung dann in Frage, wenn kleine Toleranzen und hohe Oberflächenqualität gefordert wird.

Eine weitere Leistungssteigerung der zuvor erwähnten Werkzeugmaschinen findet jedoch eine Grenze in der zu erzielenden Verarbeitungsgenauigkeit, insbesondere wenn die geforderten Toleranzen sehr gering sein sollen. Die Verarbeitungsqualität hängt im wesentlichen von dem Antrieb, von der von diesem angetriebenen Spindel und von dem auf der Spindel sitzenden Werkzeug ab. Ein großes Problem stellen insbesondere die hohen Schnittkräfte dar, die eine Deformation des Werkzeugs und der Werkzeugspindel und somit eine unerwünschte Erhöhung der Fertigungstoleranzen zur Folge haben. Zwar erscheint eine Verbesserung dieser Teile durch geeignete Auswahl ganz spezieller und hochwertiger Werkstoffe nicht ausgeschlossen; jedoch dürfte dann die Werkzeugmaschine unter dem Gesichtspunkt der Wirtschaftlichkeit uninteressant werden. Insbesondere muß die Wirtschaftlichkeit einer solchen Werkzeugmaschine bei einer Massenfertigung berücksichtigt werden, bei welcher nur wenig Material abzutragen ist und eine vergleichsweise hohe Verarbeitungsgenauigkeit gefordert wird.

Es ist daher Aufgabe der Erfindung, eine Werkzeugmaschine der eingangs genannten Art derart zu verbessern, daß sie sich für die Massenproduktion von Werkstücken mit hoher Präzision eignet und gleichzeitig die Anforderungen an Produktivität und Wirtschaftlichkeit erfüllen kann.

Diese Aufgabe wird dadurch gelöst, daß mehrere Werkstückträger um das rotierende Werkzeug herum angeordnet sind und daß diese Werkstückträger und/oder das Werkzeug während der Zerspanungsvorgangs so verfahrbar sind, daß das rotierende Werkzeug zumindest kurz vor Beendigung des Zerspanungsvorgangs stets mit allen auf diesen Werkstückträgern aufgespannten Werkstücken gleichzeitig in Berührung gelangt.

Ein wesentliches Merkmal der Erfindung besteht also darin, daß mehrere auf den mehreren Werkstückträgern aufgespannte Werkstücke um das rotierende, spanabhebende Werkzeug herum verteilt sind und zumindest kurz vor Beendigung des Zerspanungsvorganges vom Werkzeug gleichzeitig bearbeitet werden. Hierzu werden gemäß der Erfindung die Werkstückträger und/oder das Werkzeug so verfahren, daß das Werkzeug zumindest kurz vor Beendigung des Zerspanungsvorganges stets mit allen dieses umgebenden Werkstücken gleichzeitig in Berührung gelangt. Dadurch wird das Werkzeug und die dieses tragende Werkzeugspindel von mehreren Seiten gleichzeitig beansprucht. Dies führt in überraschender und zugleich vorteilhafter Weise dazu, daß das Werkzeug und die Werkzeugspindel sich nicht so stark verformen oder nachgeben können, wie es beim Stand der Technik der Fall ist, da sich die einzelnen auf das Werkzeug und die Werkzeugspindel wirkenden Kräfte zumindest zu einem erheblichen Teil gegenseitig aufheben. Die punktuelle Biegebeanspruchung und somit die Verformung werden dadurch erheblich verringert, was zu einer Reduzierung der Fertigungstoleranzen und einer Verbesserung der Oberflächenqualität des hergestellten Werkstückes führt. Dadurch, daß erfindungsgemäß das Werkzeug mit mehreren Werkstücken gleichzeitig in Berührung gebracht wird, erhöht sich die Eigenfrequenz derart, daß die gefürchtete Resonanz, welche zu einer unerwünschten Erhöhung der Fertigungstoleranzen führt, bei der erfindungsgemäßen Werkzeugmaschine praktisch vernachlässigt werden kann.

An dieser Stelle sei angemerkt, daß es nicht unbedingt darauf ankommt, daß bereits zu Beginn des Zerspanungsvorganges ein Kontakt des Werkzeugs mit allen zu bearbeitenden Werkstücken hergestellt wird; zu Beginn des Betriebes ist auch der Kontakt mit nur einem oder wenigen Werkstücken erlaubt. Maßgeblich für die Erzielung der geforderten hohen Fertigungsqualität ist nach der erfindungsgemäßen Lehre vielmehr, daß das rotierende Werkzeug zumindest kurz vor Beendigung des Zerspanungsvorganges stets mit allen Werkstücken gleichzeitig in Berührung gelangt. Für die Qualität der bearbeiteten Werkstückoberfläche ist nämlich nicht der Anfang, sondern das Ende des Zerspanungsvorganges entscheidend.

Ein weiterer Vorteil der Erfindung besteht darin, daß mehrere Werkstücke gleichzeitig bearbeitet werden können. Die gleichzeitige Bearbeitung von mehreren Werkstücken führt zur Verkürzung der Fertigungszeiten. Zeitverkürzungen können ebenfalls durch paralleles, also gleichzeitiges Aufspannen der zu bearbeitenden Werkstücken und durch paralleles, also gleichzeitiges Abnehmen der fertiggestellten Werkstücke erzielt werden. Dadurch können auch gleichzeitig noch die Transportwege verkürzt werden, was zu einer Verkürzung der Rüst- und Nebenzeiten und somit zu einer weiteren Zeitverkürzung des gesamten Herstellungsvorganges führt.

Nach alledem läßt sich mit der Erfindung eine hohe Fertigungsqualität mit überraschend geringen Fertigungstoleranzen bei gleichzeitig schneller Bearbeitung und somit hoher Verarbeitungsleistung erreichen. Dadurch ist die erfindungsgemäße Werkzeugmaschine besonders wirtschaftlich, und die Erfindung ermöglicht insbesondere erstmalig einen wirtschaftlichen Einsatz für die Massenfertigung von Werkstücken, bei denen auch nur wenig Material abzutragen ist, jedoch eine hohe Präzision und Oberflächenqualität gefordert sind.

Ein weiterer Vorteil der Erfindung besteht in dem kompakten Aufbau der Werkzeugmaschine, da die Werkstückträger und somit alle wesentlichen Einheiten um das Werkzeug herum angeordnet sind. Auf diese Weise ergibt sich zugleich auch ein höherer Schutz gegenüber eventuell herumfliegenden Werkzeug- oder Werkstückteilen, so daß die Erfindung auch unter dem Sicherheitsgesichtspunkt interessant ist.

Besonders gute Ergebnisse erzielt man, wenn das rotierende Werkzeug zumindest kurz vor Beendigung des Zerspanungsvorganges stets mit allen auf diesen Werkstückträgern aufgespannten Werkstücke nicht nur gleichzeitig, sondern auch unter gleichen Kontaktbedingungen in Berührung gelangt. Noch bessere Ergebnisse erzielt man, wenn bereits nach Beginn des Zerspanungsvorgangs das rotierende Werkzeug mit allen auf den Werkstückträgern aufgespannten Werkstücken unter gleichen Kontaktbedingungen in Berührung gelangt.

Unter "gleichen Kontaktbedingungen" ist vorzugsweise zu verstehen, daß die Kontaktflächen zwischen Werkstück und Werkzeug bei allen Werkstücken in Ausbildung und Abmessungen sowie in Anordnung gegenüber der Drehachse des Werkzeugs zumindest im wesentlichen gleich sind. Insbesondere sollen die Kontaktflächen dieselbe Kontaktlänge und dieselbe Kontaktbreite besitzen. Auch sollten die vom Werkzeug auf die Werkstücke übertragenen Kräfte in Richtung und Stärke zumindest im wesentlichen gleich sein. Diese Kräfte teilen sich im allgemeinen in zwei Vektoren auf, nämlich in einen im wesentlichen rechtwinklig zur Werkstückoberfläche verlaufenden Andruckkraftvektor und einen im wesentlichen tangential zur Werkzeugoberfläche gerichteten Zerspanungskraftvektor. Diese Kraftvektoren sollten dann in Richtung und Stärke im wesentlichen bei allen Werkstücken gleich sein. Um gleiche Kontaktbedingungen zu erreichen, sollten auch alle Werkstücke in Form und Ausbildung sowie in Anordnung gegenüber der Rotationsachse des Werkzeugs im wesentlichen übereinstimmen.

Um die Fertigung von unterschiedlichen Profilen sowie die gleichzeitige Bearbeitung von zwei oder mehreren Werkstückabschnitten zu ermöglichen, können vorzugsweise mehrere Werkzeuge auf einer rotierenden Werkzeugspindel hintereinander angeordnet sein. Diese Ausführung erlaubt auch eine Erhöhung der Anzahl der gleichzeitig zu bearbeitenden Werkstücke, indem insbesondere mehrere Werkstückträger um jedes Werkzeug angeordnet sind und die Werkstückträger und/oder die Werkzeuge so verfahrbar sind, daß jedes Werkzeug zumindest kurz vor Beendigung des Zerspanungsvorganges stets mit allen auf den zugehörigen Werkstückträgern aufgespannten Werkstücken gleichzeitig in Berührung gelangt.

Im allgemeinen ist es ausreichend, wenn die Werkstückträger nur rechtwinklig zur Rotationsachse des Werkzeugs verfahrbar sind. Dadurch kann die Anzahl der Vorschubachsen auf ein erlaubtes Maß reduziert werden.

Bei einer Weiterbildung ist zumindest ein Teil der Werkstückträger so angeordnet, daß die Berührungsstellen der auf diesen Werkstückträgern aufgespannten Werkstücke mit dem Werkzeug in einer Ebene liegen, die winklig zur Rotationsachse des Werkzeugs verläuft.

Eine besonders gleichmäßige Beanspruchung des Werkzeugs läßt sich dadurch erreichen, daß die Werkstückträger so um das Werkzeug herum verteilt sind, daß der Winkelabstand zwischen den Berührungsstellen zweier benachbarter Werkstücke mit dem Werkzeug, bezogen auf dessen Rotationsachse, bei allen Werkstücken gleich ist. Bei dieser Weiterbildung sind die Werkstücke also gleichmäßig um das Werkzeug herum verteilt angeordnet. Dadurch heben sich die von den Werkstücken auf das Werkzeug ausgeübten Kräfte in besonders hohem Maße gegenseitig auf.

Vorzugsweise sollten sämtliche Berührungsstellen der Werkstücke mit dem Werkzeug auf einer sich rechtwinklig zur Rotationsachse des Werkzeugs erstreckenden Ebene liegen.

Ferner kann eine geradzahlige Anzahl von Werkstückträgern vorgesehen sein und können die Werkstückträger so angeordnet sein, daß die Berührungsstellen von jeweils zwei Werkstücken mit dem Werkzeug symmetrisch zu dessen Rotationsachse liegen. Bei einer Weiterbildung dieser Ausführung liegen sich, bezogen auf die Rotationsachse, jeweils zwei Werkstücke gegenüber und liegen die Berührungsstellen dieser Werkstücke auf einer die Rotationsachse rechtwinklig schneidenden Linie. Dann ist gewährleistet, daß sich die auf das Werkzeug wirkenden Kräfte im wesentlichen völlig gegenseitig aufheben, wodurch eine Verformung des Werkzeugs praktisch nicht mehr gegeben ist. Es versteht sich von selbst, daß bei dieser Ausführung das Werkzeug im wesentlichen die Form einer kreisförmigen Scheibe haben muß.

Zur Reduzierung der Anzahl der Vorschubachsen kann das rotierende Werkzeug nur in Richtung seiner Rotationsachse verfahrbar sein, so daß die Rotationsachse die einzige Vorschubachse des Werkzeugs bildet, oder kann alternativ das rotierende Werkzeug ortsfest angeordnet sein.

Zur Herstellung von rotationssymmetrischen Teilen sollten die Werkstücke zweckmäßigerweise an den Werstückträgern drehbar gehaltert und von entsprechenden Antriebseinrichtungen antreibbar sein, wobei die Rotationsachse der Werkstücke wahlweise parallel oder winklig zur Rotationsachse des Werkzeugs verläuft.

Bei einer weiteren zweckmäßigen Ausführung der Erfindung hat das Werkzeug im wesentlichen die Form einer Scheibe, deren Mittelachse mit der Rotationsachse zusammenfällt und deren Umfang während der Zerspanungsvorganges mit den Werkstücken in Berührung gelangt. Das Werkzeug kann beispielsweise aus einer Schleifscheibe bestehen, so daß die erfindungsgemäße Werkzeugmaschine eine sehr effektive Hochleistungsschleifmaschine bildet, die eine so hohe Abtragsrate besitzt, daß auf andere spanende Fertigungsverfahren verzichtet werden kann, ohne daß die Bearbeitungszeit oder Fertigungsqualität in nachteiliger Weise beeinflußt werden. Mit Hilfe der Erfindung können also die Vorteile des Hochleistungsschleifverfahrens voll ausgenutzt werden.

Alternativ kann das Werkzeug natürlich beispielsweise auch aus einem Fräs- oder einem Drehwerkzeug bestehen.

Zweckmäßigerweise können in die erfindungsgemäße Werkzeugmaschine auch noch Be- und Entlade-, Abricht-, Schärf-, Kühlschmierstoff- und/oder Reinigungseinrichtungen integriert sein.

Zur Erhöhung der Sicherheit können zumindest die Werkstückträger und das Werkzeug gemeinsam von einem Gehäuse im wesentlichen umschlossen sein. Aufgrund des kompakten Aufbaus der erfindungsgemäßen Werkzeugmaschine kann dann auch das Gehäuse recht kompakt ausgeführt werden.

Nachfolgend wird ein bevorzugtes Ausführungsbeispiel der Erfindung anhand der beiliegenden Figuren näher erläutert. Es zeigen:

Fig. 1 eine schematische, ausschnittsweise Seitenansicht einer Hochleistungsschleifmaschine; und

Fig. 2 eine schematische Draufsicht auf eine solche Maschine.

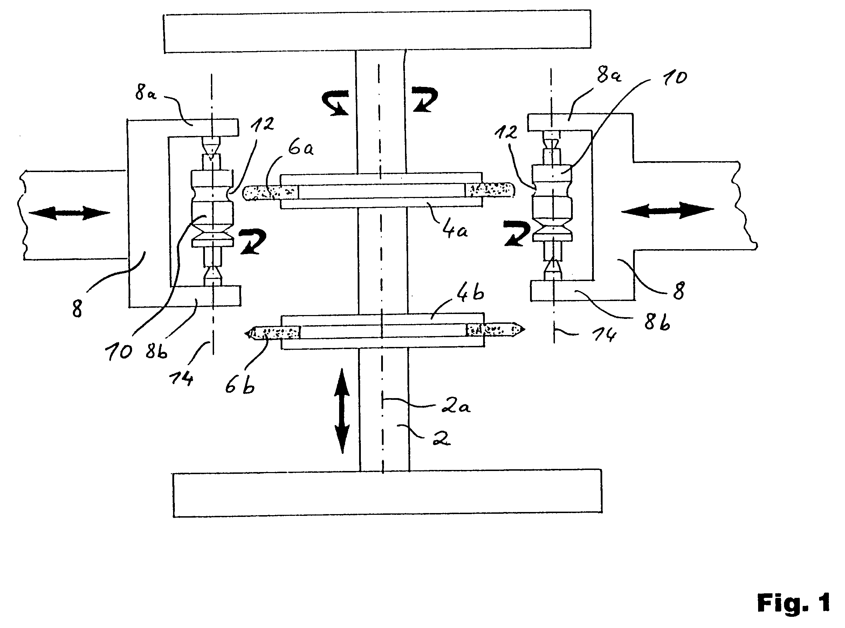

Die in Fig. 1 dargestellte Hochleistungsschleifmaschine weist eine Werkzeugspindel 2 auf, die von einem nicht dargestellten Antrieb gedreht wird. Auf der Werkzeugspindel 2 sind zwei Schleifscheiben 4a und 4b im Abstand voneinander angeordnet. Die Schleifscheiben 4a, b besitzen eine Kreisform, wobei die Mittelachse mit der Rotationsachse 2a der Werkzeugspindel 2 zusammenfällt. Demnach sind die Schleifscheiben 4a, b rechtwinklig zur Rotationsachse 2a angeordnet. Die Schleifscheiben 4a, b sind an der Werkzeugspindel 2 fest fixiert. Die Werkzeugspindel 2 ist von einer nicht dargestellten Vorschubeinrichtung in Richtung ihrer Rotationsachse 2a verfahrbar.

Jede Schleifscheibe 4a und 4b enthält einen ringförmigen Schleifkörper 6a bzw. 6b, der den Umfang der Schleifscheibe bildet. Bei den Schleifscheiben 4a, b der dargestellten Ausführung handelt es sich demnach um Umfangsschleifscheiben. Der Rand des Schleifkörpers 6a der Schleifscheibe 4a ist im Querschnitt halbkreisförmig und der Rand des Schleifkörpers 6b der Schleifscheibe 4b im Querschnitt dreiecksförmig mit im spitzen Winkel aufeinander zulaufenden Bearbeitungsflächen ausgebildet, so daß entsprechende halbkreisförmige oder spitze Einschnitte geschliffen werden können.

Durch entsprechendes Verfahren der Schleifscheibe kann darüberhinaus jedes beliebige Profil erzeugt werden.

Beiderseits der Werkzeugspindel 2 und den Schleifscheiben 4a und b sind Werkstückträger 8 angeordnet, die in einer Richtung rechtwinklig zur Rotationsachse 2a verfahrbar sind. Die Werkstückträger 8 weisen ein gabelförmiges Ende auf, zwischen dessen Schenkeln 8a und b ein Werkstück 10 gehaltert ist. Dabei ist das Werkstück 10 drehbar zwischen den Schenkeln 8a, b eingespannt. Während der Bearbeitung durch die Schleifscheiben 4a oder 4b können die Werkstücke 10 von einer nicht dargestellten Antriebseinrichtung angetrieben und um eine Rotationsachse 14 gedreht werden. Im dargestellten Ausführungsbeispiel stimmen sämtliche Werkstücke 10 in Form und Ausbildung sowie in Anordnung gegenüber der Rotationsachse 2a im wesentlichen überein. Die Rotationsachse 14 der Werkstücke 10 verläuft parallel zur Rotationsachse 2a der Werkzeugspindel 2. Auf diese Weise können aus den Werkstücken 10 sowohl rotationssymmetrische als auch nichtrotationssymmetrische Teile wie z.B. Wellen hergestellt werden.

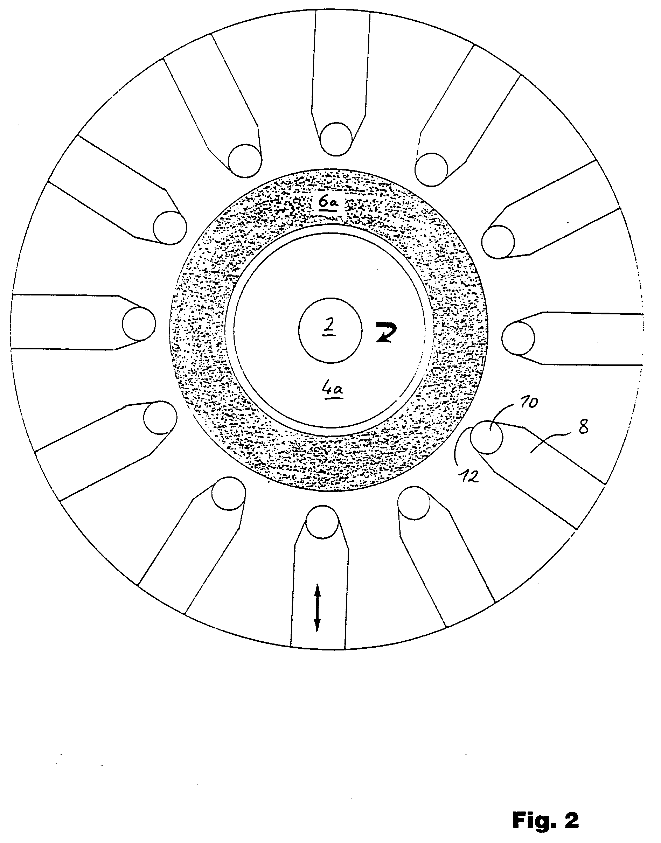

Fig. 2 zeigt schematisch die Anordnung der Werkstückträger 8. In Fig. 2 ist nur die Schleifscheibe 4a in Draufsicht dargestellt und nur ein Werkstückträger mit den entsprechenden Bezugszeichen (vgl. hierzu Fig. 1) versehen, und zwar stellvertretend für alle dargestellten Werkstückträger 8.

Wie Fig. 2 erkennen läßt, sind die Werkstückträger 8 in gleichem Winkelabstand zueinander um die Schleifscheiben und somit um die Werkzeugspindel 2 herum verteilt angeordnet. In diesem Ausführungsbeispiel sind 12 Werkstückträger 8 vorgesehen. Dabei sind jeweils zwei gegenüberliegende Werkstückträger symmetrisch zur Rotationsachse 2a der Werkzeugspindel 2 angeordnet. Die Erfindung ist jedoch nicht auf eine geradzahlige Anzahl von Werkstückträgern beschränkt. Vielmehr kann auch eine ungeradzahlige Anzahl von Werkstückträgern und somit Werkstücken vorgesehen sein. Entscheidend ist nämlich, daß die Werkstücke 10 so angeordnet sind, daß sich die auf die Schleifscheiben 4a und 4b und somit auf die Werkzeugspindel 2 wirkenden Kräfte im wesentlichen aufheben.

Sämtliche Werkstückträger 8 mit den darauf aufgespannten Werkstücken 10 werden während des Betriebes der Hochleistungsschleifmaschine in Richtung auf die Schleifscheibe 4a oder 4b vorgefahren, je nachdem welche Schleifscheibe in Abhängigkeit von der Stellung der Werkzeugspindel 2 den Werkstücken 10 gegenüberliegt (- bei der Darstellung der Figuren 1 und 2 ist es die Schleifscheibe 4a). Der Vorschub der Werkstückträger 8 wird von einer nicht dargestellten Steuereinheit so gesteuert, daß zumindest kurz vor Beendigung des Schleifvorganges die Schleifscheibe 4a sich mit allen 12 Werkstücken 10 gleichzeitig und unter gleichen Kontaktbedingungen in Berührung befindet und diese gleichzeitig bearbeitet. Dabei sind die Kontaktflächen zwischen den Werkstücken 10 und der Schleifscheibe 4a bei allen Werkstücken 10 in Ausbildung und Abmessung sowie in Anordnung gegenüber der Rotationsachse 2a im wesentlichen gleich. Im einzelnen bedeutet dies, daß sämtliche Kontaktflächen dieselbe Kontaktlänge und dieselbe Kontaktbreite besitzen. Auch sind die von der Schleifscheibe 4a auf die Werkstücke 10 übertragenen Kräfte in Richtung und Stärke im wesentlichen gleich. Diese Kräfte lassen sich im allgemeinen in zwei Vektoren aufteilen, nämlich in einen radial verlaufenden Andruckkraftvektor und einen tangential gerichteten Zerspanungskraftvektor. Diese beiden Kraftvektoren müssen demnach in ihrer Richtung und Stärke im wesentlichen bei allen Werkstücken 10 übereinstimmen.

Die Berührungsstellen 12 sämtlicher Werkstücke 10 liegen mit dem Schleifkörper (z.B. 6a) der Schleifscheibe (z.B. 4a) in einer Ebene, die rechtwinklig zur Rotationsachse 2a der Werkzeugspindel 2 verläuft. Der Winkelabstand zwischen den Berührungsstellen 12 zweier benachbarter Werkstücke 10, bezogen auf die Rotationsachse 2a der Werkzeugspindel 2, ist gleich, wobei die Berührungsstellen 12 von jeweils zwei gegenüberliegenden Werkstücken 8 symmetrisch zur Rotationsachse 2a liegen. Diese Anordnung läßt sich aus Fig. 2 entnehmen, die allerdings die Werkstücke 10 kurz vor der Berührung mit der Schleifscheibe 4a zeigt. Während des Schleifvorganges können die Werkzeugspindel 2 in Richtung ihrer Rotationsachse 2a und die Werkstückträger 8 verschoben werden, um besondere Profile aus dem Werkstück 10 herauszuschleifen.

Ergänzend wird an dieser Stelle noch darauf hingewiesen, daß die Rotationsachsen 14 der Werkstücke 10 und die Rotationsachse 2a der Werkzeugspindel 2 nicht nur parallel, sondern wahlweise auch winklig zueinander angeordnet sein können, was insbesondere von dem gewünschten Profil des geschliffenen Werkstückes 10 abhängt.

Abschließend ist noch anzumerken, daß anstelle der in den Figuren 1 und 2 dargestellten Schleifscheiben 4 auch andere Werkzeugarten, wie z.B. ein Fräswerkzeug oder ein Drehwerkzeug, verwendet werden können. Selbstverständlich können auch mehrere Werkstückträger in mehreren Ebenen untereinander angeordnet werden, um die Anzahl der zu bearbeitenden Werkstücke zu erhöhen. Sollen keine rotationssymmetrischen Teile aus den Werkstücken hergestellt werden, so können diese auch fest an den Werkstückträgern 8 eingespannt werden.

Zusätzlich zu den in den Figuren 1 und 2 dargestellten Elementen können auch noch Be- und Entlade-, Abricht-, Schärf-, Kühlschmierstoff- und/oder Reinigungseinrichtungen vorgesehen sein. Auch kann die in den Figuren 1 und 2 dargestellte Anordnung von einem Gehäuse umschlossen sein, welches der Übersichtlichkeit halber nicht dargestellt ist.

**Patentansprüche**

1. Werkzeugmaschine zur spanabhebenden Bearbeitung von Werkstücken, mit Werkstückträgern (8) zum Aufspannen von Werkstücken (10) und mit mindestens einem rotierenden, spanabhebenden Werkzeug (4a; 4b), welches während des Zerspanungsvorganges mit den Werkstücken (10) in Berührung gelangt; dadurch gekennzeichnet, daß mehrere Werkstückträger (8) um das rotierende Werkzeug (4a; 4b) herum angeordnet sind und daß diese Werkstückträger (8) und/oder das Werkzeug (4a; 4b) während des Zerspanungsvorganges so verfahrbar sind, daß das rotierende Werkzeug (4a; 4b) zumindest kurz vor Beendigung des Zerspanungsvorganges stets mit allen auf diesen Werkstückträgern (8) aufgespannten Werkstücken (10) gleichzeitig in Berührung gelangt.

2. Werkzeugmaschine nach Anspruch 1, dadurch gekennzeichnet, daß die Werkstückträger (8) und/oder das Werkzeug (4a; 4b) während des Zerspanungsvorganges so verfahrbar sind, daß das rotierende Werkzeug (4a; 4b) zumindest kurz vor Beendigung des Zerspanungsvorganges stets mit allen auf diesen Werkstückträgern (8) aufgespannten Werkstücken (10) auch unter gleichen Kontaktbedingungen in Berührung gelangt.

3. Werkzeugmaschine nach Anspruch 2, dadurch gekennzeichnet, daß die Werkstückträger (8) und/oder das Werkzeug (4a; 4b) während des Zerspanungsvorganges so verfahrbar sind, daß das rotierende Werkzeug (4a; 4b) bereits nach Beginn des Zerspanungsvorgangs stets mit allen auf diesen Werkstückträgern (8) aufgespannten Werkstücken (10) unter gleichen Kontaktbedingungen in Berührung gelangt.

4. Werkzeugmaschine nach Anspruch 2 oder 3, dadurch gekennzeichnet, daß die Kontaktflächen (12) zwischen Werkstück (10) und Werkzeug (4a; 4b) bei allen Werkstücken (10) in Ausbildung und Abmessungen sowie in Anordnung gegenüber der Rotationsachse (2a) des Werkzeugs (4a; 4b) zumindest im wesentlichen gleich sind.

5. Werkzeugmaschine nach mindestens einem der Ansprüche 2 bis 4, dadurch gekennzeichnet, daß die vom Werkzeug (4a; 4b) auf die Werkstücke (10) übertragenen Kräfte in Richtung und Stärke zumindest im wesentlichen gleich sind.

6. Werkzeugmaschine nach mindestens einem der Ansprüche 2 bis 5, dadurch gekennzeichnet, daß alle Werkstücke (10) in Form und Ausbildung sowie in Anordnung gegenüber der Rotationsachse (2a) des Werkzeugs (4a; 4b) im wesentlichen übereinstimmen.

7. Werkzeugmaschine nach mindestens einem der Ansprüche 1 bis 6, dadurch gekennzeichnet, daß auf einer rotierenden Werkzeugspindel (2) mehrere Werkzeuge (4a, 4b) hintereinander angeordnet sind.

8. Werkzeugmaschine nach Anspruch 7, dadurch gekennzeichnet, daß mehrere Werkstückträger um jedes Werkzeug herum angeordnet sind und daß die Werkstückträger und/oder die Werkzeuge so verfahrbar sind, daß jedes Werkzeug zumindest kurz vor Beendigung des Zerspanungsvorganges stets mit allen auf den zugehörigen Werkstückträgern aufgespannten Werkstücken gleichzeitig in Berührung gelangt.

9. Werkzeugmaschine nach mindestens einem der Ansprüche 1 bis 8, dadurch gekennzeichnet, daß die Werkstückträger (8) nur winklig zur Rotationsachse (2a) des Werkzeugs (4a; 4b) verfahrbar sind.

10. Werkzeugmaschine nach mindestens einem der Ansprüche 1 bis 9, dadurch gekennzeichnet, daß die Werkstückträger (8) so um das Werkzeug (4a; 4b) herum verteilt sind, daß der Winkelabstand zwischen den Berührungsstellen (12) zweier benachbarter Werkstücke (10) mit dem Werkzeug (4a; 4b), bezogen auf dessen Rotationsachse (2a), bei allen Werkstücken (10) gleich ist.

11. Werkzeugmaschine nach mindestens einem der Ansprüche 1 bis 10, dadurch gekennzeichnet, daß sämtliche Berührungsstellen (12) der Werkstücke (10) mit dem Werkzeug (4a; 4b) auf einer sich rechtwinklig zur Rotationsachse (2a) des Werkzeugs (4a;

4b) erstreckenden Ebene liegen.

12. Werkzeugmaschine nach mindestens einem der Ansprüche 1 bis 11, dadurch gekennzeichnet, daß eine geradzahlige Anzahl von Werkstückträgern (8) vorgesehen ist und die Werkstückträger (8) so angeordnet sind, daß die Berührungsstellen (12) von jeweils zwei Werkstücken (10) mit dem Werkzeug (4a; 4b) symmetrisch zu dessen Rotationsachse (2a) liegen.

13. Werkzeugmaschine nach den Ansprüche 11 und 12, dadurch gekennzeichnet, daß sich, bezogen auf die Rotationsachse (2a), jeweils zwei Werkstücke (10) gegenüberliegen und die Berührungsstellen (12) dieser Werkstücke (10) auf einer die Rotationsachse (2a) rechtwinklig schneidenden Linie liegen.

14. Werkzeugmaschine nach mindestens einem der Ansprüche 1 bis 13, dadurch gekennzeichnet, daß das rotierende Werkzeug (4a; 4b) nur in Richtung seiner Rotationsachse (2a) verfahrbar ist, so daß die Rotationsachse (2a) die einzige Vorschubachse des Werkzeugs (4a; 4b) bildet.

15. Werkzeugmaschine nach mindestens einem der Ansprüche 1 bis 13, dadurch gekennzeichnet, daß das rotierende Werkzeug ortsfest angeordnet ist.

16. Werkzeugmaschine nach mindestens einem der Ansprüche 1 bis 15, dadurch gekennzeichnet, daß die Werkstücke (10) an den Werkstückträgern (8) drehbar gehaltert und von entsprechenden Antriebseinrichtungen antreibbar sind.

17. Werkzeugmaschine nach Anspruch 16, dadurch gekennzeichnet, daß die Rotationsachse (14) der Werkstücke (10) parallel zur Rotationsachse (2a) des Werkzeugs (4a; 4b) verläuft.

18. Werkzeugmaschine nach mindestens einem der Ansprüche 1 bis 17, dadurch gekennzeichnet, daß das Werkzeug (10) im wesentlichen die Form einer Scheibe hat, deren Mittelachse mit der Rotationsachse (2a) zusammenfällt und deren Umfang (6a; 6b) während des Zerspanungsvorganges mit den Werkstücken (10) in Berührung gelangt.

Fig. 1

**Fig. 2**

Europäisches
Patentamt

**EUROPÄISCHER RECHERCHENBERICHT**

Nummer der Anmeldung

EP    92 10 3831

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-308 145 (MANNESMAN) <br><br> * das ganze Dokument * <br> --- | 1-6,10, 12,13, 16-18 | B24B5/02 <br> B23Q7/04 |
| X | GB-A-528 902 (COVENTRY GAUGE &TOOL CO.) <br> * Seite 4, Zeile 33 - Zeile 98; Abbildung 5 * <br> --- | 1,7-9,15 | |
| A | US-A-2 407 557 (KNEISLEY) <br> * Abbildung 1 * <br><br> ----- | 1,14 | |

|  |
|---|
| **RECHERCHIERTE SACHGEBIETE (Int. Cl.5)** |
| B24B <br> B23Q |

Der vorliegende Recherchenbericht wurde für alle Patentansprüche erstellt

| Recherchenort | Abschlußdatum der Recherche | Prüfer |
|---|---|---|
| DEN HAAG | 02 JULI 1992 | ESCHBACH O.P.M. |